# EUROPEAN PATENT SPECIFICATION

(11) **EP 1 605 477 B1**
(45) Date of publication and mention of the grant of the patent: **13.02.2008**
(21) Application number: 05017872.2
(22) Date of filing: 28.12.2000
(51) Int. Cl.: H01G 4/30, H01G 4/232

(54) **Multilayer ceramic capacitor for three-dimensional mounting**
Keramischer Vielschichtkondensator für dreidimensionale Montage
Condensateur céramique multicouche pour montage tridimensionnel

(43) Date of publication of application: 14.12.2005
(62) Divisional of application: 00128609.5
(73) Proprietor: TDK Corporation, Tokyo 103-8272 (JP)
(72) Inventor: Ahiko, Taisuke c/o TDK-MCC Corporation, Yuri-gun, Akita-ken, 018-0402 (JP); Togashi, Masaaki c/o TDK Corporation, Tokyo, 103-8272 (JP)
(74) Representative: Vossius & Partner

(56) References cited:
- EP-A- 0 351 343
- GB-A- 2 157 890
- PATENT ABSTRACTS OF JAPAN vol. 016, no. 255 (E-1214), 10 June 1992 (1992-06-10) -& JP 04 056207 A (MARCON ELECTRON CO LTD), 24 February 1992 (1992-02-24)
- PATENT ABSTRACTS OF JAPAN vol. 1996, no. 02, 29 February 1996 (1996-02-29) -& JP 07 272975 A (TDK CORP), 20 October 1995 (1995-10-20)
- PATENT ABSTRACTS OF JAPAN vol. 1997, no. 10, 31 October 1997 (1997-10-31) -& JP 09 148174 A (ROHM CO LTD), 6 June 1997 (1997-06-06)

## Description

The present invention relates to a multilayer ceramic capacitor for three-dimensional mounting suitable for mounting in a personal computer or other electronic apparatus with a high operating frequency as a low equivalent serial inductance (ESL) and low equivalent serial resistance (ESR) capacitor and suitable for mounting on a three-dimensional multilayer printed circuit board.

In the past, as multiterminal multilayer ceramic capacitors, for example the capacitor disclosed in U.S. Patent No. 5880925 is known. This capacitor has a capacitor body which has two types of, that is, first and second, internal electrodes and dielectric layers stacked to sandwich them. Each of these internal electrodes is formed with a rectangular main portion pattern extending in the longitudinal direction on a face of a rectangular ceramic layer and a plurality of lead patterns extending from the sides of the main portion to the sides of the ceramic layer. The lead patterns of the first internal electrodes and the lead patterns of the second internal electrodes are formed at different positions from each other when seen from a plan view. A plurality of external electrodes are formed at the side faces of the long and short sides of the capacitor body of this multiterminal multilayer ceramic capacitor.

This multiterminal multilayer ceramic capacitor is placed on the surface of a circuit board so that the external electrodes are positioned in a standing direction from the surface of the circuit board. The stacking direction of the internal electrodes and the ceramic layers are substantially vertical to the circuit board. The external electrodes are joined and fixed by soldering to the lands of the circuit pattern of the circuit board so as to mount the capacitor on the surface of the circuit board.

In this type of multilayer ceramic capacitor, however, since the stacking direction of the internal electrodes and the ceramic layers is made to register with the height direction of the capacitor for the surface mounting, if the number of ceramic layers stacked is increased from the electrical characteristics required, the height of the electronic devices cannot be kept low.

Note that as multilayer electronic devices for surface mounting by bringing the stacking direction of the ceramic layers into register with the height direction of the multilayer electronic device, in addition to the one of U.S. Patent No. 5880925, there are many known such as those disclosed in JP-B-64-10927, JP-A-7-161568, JP-A-7-169649, JP-A-7-169651, JP-A-7-272975, JP-A-8-124800, JP-A-9-148174, JP-U-4-6-7228, JP-B-62-35257, and JP-B-63-38856. In a multilayer electronic device for surface mounting by bringing the stacking direction of the ceramic layers into register with the height direction of the multilayer electronic device, there is the problem that, if the number of ceramic layers stacked is increased from the electrical characteristics required, it is not possible to keep low the height of the electronic device.

In personal computers and other electronic apparatuses, however, the operating frequency has increased from 500 MHz to 1 GHz. The power supply circuit is required to be a low ESL and low ESR multilayer ceramic capacitor. Further, in view of the increasingly smaller sizes of electronic apparatuses, a multiterminal multilayer ceramic capacitor which keeps the height dimension low, enables reliable surface mounting on a three-dimensional printed circuit board etc., and gives predetermined characteristics has been demanded.

If three-dimensionally mounting a conventional multiterminal multilayer ceramic capacitor on a three-dimensional multilayer printed circuit board etc., however, the circuit pattern formed on the circuit board becomes longer, the detouring of the lands becomes longer, and there is a detrimental effect on the inductance component. In particular, a circuit pattern comprised of lands at upper positions and lands at lower positions becomes longer, the detouring of the lands becomes longer and has a detrimental effect on the inductance component, and generation of noise becomes unavoidable.

Further, if surface mounting the conventional capacitor near the terminals of a semiconductor etc. to lower the ESL, there is the problem that the effect of the inductance component due to the detouring of the lands cannot be ignored. Further, in a conventional capacitor, as explained above, the height dimension of the capacitor itself cannot be kept low no matter what the number of layers stacked. From this, the conventional capacitor is not suited for three-dimensional mounting.

Note that as shown in JP-A-57-60827 and JP-G-2657953, a capacitor in which the stacking direction of the ceramic layers is brought into register with the planar direction of the circuit board on which the multilayer ceramic capacitor is to be surface mounted has been proposed. The capacitors disclosed in these publications, however, has the problems that the capacitors cannot be three-dimensionally mounted and the ESR and/or ESL of the external circuits connected to the capacitors easily become large.

In GB-A-2 157 890, a feed through capacitor is disclosed, the capacitor having first and second terminals for passing data or control signals unimpeded via a d.c. path formed at least in part by a first set of electrodes connected in parallel between terminations and a second set of electrodes interleaved with the first set and connected to a third termination.

JP-A-04056207 describes a monolithic ceramic capacitor with a laminated body which is formed by alternately laminating a pair of ceramic green sheets carrying internal electrodes having electrode lead-out parts extended to the outer circumference at two places on one side on the surface of a square plate in such a manner that the electrode lead-out parts are positioned in the same direction between the pair, and two pairs of external electrodes which are formed by connecting the electrode lead-out parts to one side face where the electrode lead-out parts of the laminated body are exposed.

An object of the present invention is to provide a multilayer ceramic capacitor for three-dimensional mounting suitable for mounting in a personal computer or other electronic apparatus with a high operating frequency as a low ESL and low ESR capacitor, enabling the height dimension to be kept low regardless of the number of ceramic layers, and suitable for mounting on a three-dimensional multilayer printed circuit board.

This object is achieved with the features of the claims. According to the present invention, it is possible to shorten the height dimension of the capacitor body regardless of the number of ceramic layers stacked. As a result, it is possible to shorten the distance between the external electrodes formed on the top face of the capacitor body and the external electrodes formed on the bottom face and possible to reduce the total inductance due to detouring of the lands even if the capacitor is placed on a multilayer board. Further, the lands formed on the multilayer board can be simplified. Therefore, the capacitor is suited for mounting in personal computers and other electronic apparatuses with high operating frequencies as a low ESL and low ESR capacitor. Further, the capacitor is structured to have a low height dimension and have electrodes on the top and bottom faces of the capacitor, is suitable for mounting buried in a three-dimensional multilayer printed circuit board etc.

The capacitor of the present invention further can realize a three-terminal capacitor. Further, when providing the capacitor through a predetermined circuit pattern of a three-dimensional circuit board and using it as a so-called through-hole type capacitor, the second external electrode formed at the side faces of the capacitor body can be directly connected to the circuit pattern passed through.

These and other objects, and features of the present invention will be explained in further detail with reference to the attached drawings, in which:
FIG. 1 is a perspective view of a through-hole type multilayer ceramic capacitor for three-dimensional mounting according to an embodiment of the present invention in a state showing the internal structure;
FIG. 2 is an explanatory view of the pattern shape of the internal electrodes constituting the through-hole type multilayer ceramic capacitor for three-dimensional mounting according to this embodiment;
FIG. 3 is a perspective view of the appearance including external electrodes of the through-hole type multilayer ceramic capacitor for three-dimensional mounting according to this embodiment; and
FIG. 4 is an explanatory view of a sandwiched mounting structure of a through-hole type multilayer ceramic capacitor for three-dimensional mounting according to this embodiment in a multilayer board.

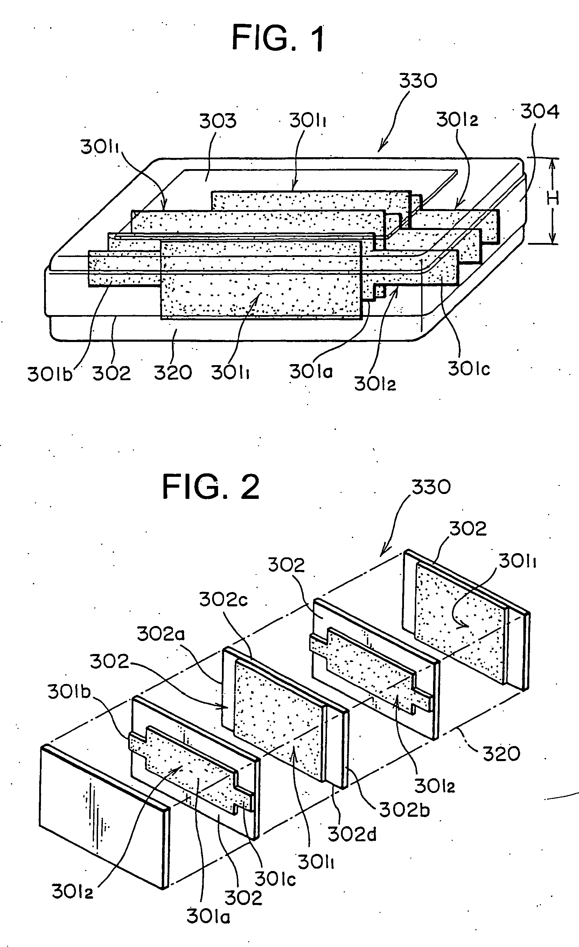

Next, explaining this embodiment by reference to FIG. 1 to FIG. 4, the through-hole type multilayer ceramic capacitor 330 for three-dimensional mounting according to the illustrated embodiment has a capacitor body 320 of a rectangular parallelopiped shape. The capacitor body 320, as shown in FIG. 1 and FIG. 2, is comprised of a plurality of first internal electrodes 301₁ and second internal electrodes 301₂ of predetermined patterns alternately stacked in the horizontal direction in the illustration via ceramic layers 302 formed in rectangular shapes. That is, in the present embodiment, as shown in FIG. 1 and FIG. 2, the plurality of first internal electrodes 301₁ and second internal electrodes 301₂ are stacked in the horizontal direction via ceramic layers 302 so that the short sides of the ceramic layers 302 register with the height direction of the capacitor body 320. Note that at least one ceramic layer 302 not formed with an internal electrode may be stacked at the two end faces of the body 320 in the stacking direction.

As shown in FIG. 1 and FIG. 2, each first internal electrode 301₁ has a rectangular first main portion positioned in a first face (surface) of the ceramic layer 302. The two long sides of the first main portion expose at the surfaces of the body 320 along the two long sides 302c and 302d of the ceramic layer 302. The longitudinal and lateral dimensions of the first electrode 301₁ are set so that the two short sides of the first electrode 301₁ do not reach the two short sides 302a and 302b of the ceramic layer 302.

Further, each second internal electrode 301₂ has a rectangular second main portion 301a along the longitudinal direction in a rear face (second face) opposite to the first main portion of the first internal electrode 301₁ across a ceramic layer 302. The second main portion 301a is formed with a pair of leads 301b and 301c exposed by extending from the two short sides to the short sides 302a and 302b of the ceramic layer 302. These leads 301b and 301c are formed so as to project out from the approximate center of the short sides of the rectangular second main portion 301a toward the two sides 302a and 302b. The dimensions of the short sides of the second main portion 301a are set so that the long sides of the rectangular second main portion 301a do not reach the long sides 302c and 302d of the ceramic layer 302. Note that the vertical width (width of height direction of body) of the leads 301b and 301c are smaller than the vertical width of the portion 301a in the illustrated example, but may also be the same width.

In the present embodiment, as shown in FIG. 1 and FIG. 2, inside the body 320, internal electrodes 301₁ and 301₂ are stacked and arranged alternately via ceramic layers 302.

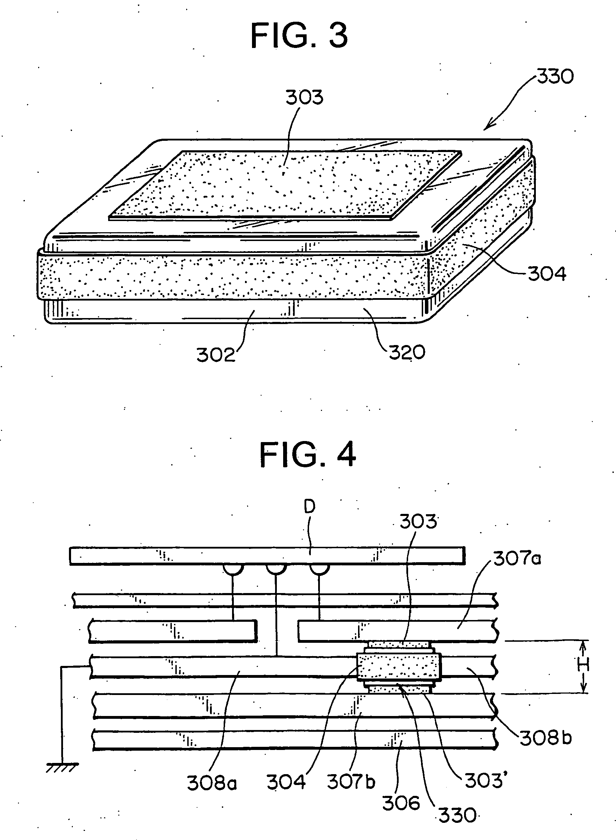

As shown in FIG. 1 and FIG. 4, the top face and bottom face of the capacitor body 320 have attached to it first external electrodes 303 and 303' so as to be electrically connected to first internal electrodes 301₁ having long sides exposed along the long sides 302a and 302d of the ceramic layer 302. The circumference of the side faces of the capacitor body 320 has attached to it a strip-like second external electrode 304 so as to be electrically connected to second internal electrodes 301₂ having leads 301c and 301d exposed along the short sides 302a and 302b of the ceramic layer 302.

The first external electrode 303 or 303' is preferably formed over the entire top face or bottom face of the capacitor body 320, but does not necessarily have to cover the entire surface. It is also possible to determine the area covered in accordance with the shapes of the lands of the multilayer board on which the capacitor 330 is to be mounted. The area of the first external electrode 303 or 303' with respect to the area of the top face or bottom face of the body 320 where the long sides of the first internal electrodes 301₁ are exposed is preferably an area of at least 50 percent.

These internal electrodes 301₁ and 301₂ are formed by coating and baking an Ni or other conductive paste on the surface of a ceramic green sheet and are comprised of Ni or Ni alloy layers etc. Note that the internal electrodes may also be comprised by the base metal Cu, precious metal Pd or a Pd-Ag alloy layer, etc.

The ceramic layer 302 is comprised of a barium titanate-based, titanium-based, zirconate-based, or other ceramic composition. A stack of the ceramic layers 302 and internal electrodes is formed by coating a ceramic paste on a base film or other film surface to make a green sheet, printing a conductive paste on it, then stacking, cutting, and firing the green sheets. After the production of the body 320, the external electrodes are formed and baked on. The external electrodes 303, 303', and 304 specifically can be formed by coating, drying, and baking a Cu paste on the capacitor body 320 to form an underlayer, then covering the underlayer with an Ni and Sn plating layer.

The multilayer ceramic capacitor 330 produced in this way is used for three-dimensional mounting of multiple terminals by directly connecting the first external electrodes 303 and 303' and the second external electrode 304 to different circuit patterns of the circuit board and supplying voltages of different polarities to the adjoining external electrodes.

The specific dimensions of the multiterminal multilayer ceramic capacitor of the present embodiment are not particularly limited, but for example are a height of 0.5±0.1 mm, a width of 0.8±0.1 mm, and a length of 1.6±0.1 mm. The thickness of one ceramic layer is not particularly limited, but is for example 4 µm. The shape of the ceramic layer is that of a rectangle of short sides of 0.5±0.1 mm and long sides of 1.6±0.1 mm. The internal electrodes 301₁ and 301₂ may be formed to a thickness of 1.5 to 2.0 µm. The distance "H" between the external electrodes 303 and 303' can be set to a width corresponding to the short sides of the ceramic layers 302, that is, 0.5±0.1 mm.

The through-hole type multilayer ceramic capacitor 330 configured in this way can be mounted sandwiched between facing circuit boards 305 and 306 in a power supply circuit provided with a semiconductor device "D" as shown in FIG. 4. This three-dimensional mounting may be performed in the following way.

That is, the vertically facing external electrodes 303 and 303' are made to directly face the different circuit patterns 307a and 307b of the circuit boards 305 and 306 or the external electrode 304 extending across the entire circumference of the side faces is made to directly face the separate circuit patterns 308a and 308b and these are electrically connected as a + pole/- pole (GND). In this three-dimensional mounting, the height "H" of the capacitor device as a whole can be kept low and, further, the distance between the facing circuit boards 305 and 306 is held narrow. Therefore, the detouring of the lands can be shortened and the effect of the inductance component can be reduced.

To reduce the inductance of the circuit pattern, by burying the multilayer ceramic capacitor 330 having an ESL value of 10 to 20 pH and an ESR value of a low 5 to 7 mΩ, the inductance component of the lands can be ignored. Due to this, if comparing the ESL and ESR of a multilayer ceramic capacitor of the prior art with an electrostatic capacity of 0.22 µF and a multilayer ceramic capacitor according to the present embodiment (same electrostatic capacity as the prior art), if the value of the multilayer ceramic capacitor according to the prior art is 100 percent, the multilayer ceramic capacitor according to the present embodiment can be made a low 2 to 3 percent in value.

This.is because in the multilayer ceramic capacitor according to the present embodiment, the distance between external electrodes 303, 303', and 304 can be set short and the height of the capacitor device as a whole can be kept low. Further, the external electrode 303 is broad and connection to the land is easy, therefore, even if the capacitor is mounted on a multilayer board, the total inductance due to the detouring of the lands can be reduced and the lands formed on the multilayer board can be simplified.

Note that the present invention is not limited to the above-mentioned embodiment and may be changed in various ways within the scope of the present invention as defined by the claims.

## Claims

1. A multilayer ceramic capacitor (330) for three-dimensional mounting comprising:
a ceramic layer formed in a rectangular shape;
a first internal electrode (301₁) having a rectangular first main portion extending along a longitudinal direction in a first face of the ceramic layer (302) and having two long sides of the first main portion exposed respectively along long sides (302c, 302d) of said ceramic layer (302);
a second internal electrode (301₂) having a rectangular second main portion extending along a longitudinal direction in a second face of the ceramic layer (302) opposite to said first face and having a pair of leads extending respectively from short sides of the second main portion to short sides (302a, 302b) of said ceramic layer (302);
a rectangular parallelepiped shaped capacitor body (320) having a width, length and height and comprised of a plurality of first internal electrodes (301₁) and second internal electrodes (301₂) stacked via ceramic layers (302) so that the short sides (302a, 302b) of the ceramic layers (302) register with the height direction of the capacitor body (320), and the long sides (302c, 302d) of the ceramic longers (302) register with the width direction;
a pair of first external electrodes (303, 303') formed at a top face and bottom face of said capacitor body (320) and electrically connected to the first internal electrode (301₁) exposed toward the long sides of the ceramic layers (320); and
a second external electrode (304) formed at the side faces of the capacitor body (320) and electrically connected to the leads exposed toward the short sides of the ceramic layer;
**characterized in that** the stacking direction of the ceramic layers (302) and the height direction of the ceramic layers (302) of the capacitor body (320) are perpendicular;
the length of the capacitor body (320) register with the stacking direction and is longer than the height of the capacitor body (320)
said first external electrodes (303, 303') are connectable to a first circuit pattern outside of said capacitor body (320) and said second external electrode (304) is connectable to a second circuit pattern different from said first circuit pattern.
the multilayer ceramic capacitor (330) is adapted to be buried in a three-dimensional circuit board; and
the first external electrodes (303, 303') and the second external electrode (304) of the multilayer ceramic capacitor (330) are adapted to be connected directly to the circuit pattern formed in the three-dimensional circuit board.

2. The multilayer ceramic capacitor as set forth in claim 1, wherein the second external electrode (304) extends in a strip along the entire circumference of the four side faces of the capacitor body (320).

## Patentansprüche

1. Vielschicht-Keramikkondensator (330) für eine dreidimensionale Montage, mit:
einer rechteckigen Keramikschicht;
einer ersten Innenelektrode (301₁) mit einem rechteckigen ersten Hauptabschnitt, der sich entlang einer Längsrichtung in einer ersten Fläche der Keramikschicht (302) erstreckt, wobei zwei lange Seiten des ersten Hauptabschnitts entsprechend entlang langen Seiten (302c, 302d) der Keramikschicht (302) freiliegen;
einer zweiten Innenelektrode (301₂) mit einem rechteckigen zweiten Hauptabschnitt, der sich entlang einer Längsrichtung in einer der ersten Fläche gegenüberliegenden zweiten Fläche der Keramikschicht (302) erstreckt und ein Paar Anschlußabschnitte aufweist, die sich entsprechend von kurzen Seiten des zweiten Hauptabschnitts zu kurzen Seiten (302a, 302b) der Keramikschicht (302) erstrecken;
einem quaderförmigen Kondensatorkörper (320) mit einer Breite, einer Länge und einer Höhe, der mehrere erste Innenelektroden (301₁) und zweite Innenelektroden (301₂) aufweist, die durch Keramikschichten (302) stapelförmig angeordnet sind, so dass die kurzen Seiten (302a, 302b) der Keramikschichten (302) mit der Höhenrichtung des Kondensatorkörpers (320) und die langen Seiten (302c, 302d) der Keramikschichten (302) mit der Breitenrichtung ausgerichtet sind;
einem Paar von ersten Außenelektroden (303, 303'), die an einer Oberseite und einer Unterseite des Kondensatorskörpers (320) ausgebildet und mit der ersten Innenelektrode (301₁) verbunden sind, die entlang der langen Seiten der Keramikschichten (302) freiliegt; und
zweiten Außenelektroden (304), die an den Seitenflächen des Kondensatorkörpers (320) ausgebildet und mit Anschlußabschnitten elektrisch verbunden sind, die entlang der kurzen Seiten der Keramikschicht (302) freiliegen;
**dadurch gekennzeichnet, dass** die Stapelrichtung der Keramikschichten (302) und die Höhenrichtung der Keramikschichten (302) des Kondensatorkörpers (320) senkrecht zueinander verlaufen;
die Länge des Kondensatorkörpers (320) mit der Stapelrichtung ausgerichtet und größer ist als die Höhe des Kondensatorkörpers (320);
die ersten Außenelektroden (303, 303') mit einem ersten Schaltungsmuster außerhalb des Kondensatorkörpers (320) verbindbar sind und die zweite Außenelektrode (304) mit einem vom ersten Schaltungsmuster verschiedenen zweiten Schaltungsmuster verbindbar ist;
der Vielschicht-Keramikkondensator (330) in einer dreidimensionalen Leiterplatte versenkbar angeordnet werden kann; und
die ersten Außenelektroden (303, 303') und die zweite Außenelektrode (304) des Vielschichtkondensators (330) direkt mit dem Schaltungsmuster in der dreidimensionalen Schaltungsplatine verbindbar ist.

2. Vielschicht-Keramikkondensator nach Anspruch 1, wobei die zweite Außenelektrode (304) sich in einem Streifen entlang dem gesamten Umfang der vier Seitenflächen des Kondensatorkörpers (320) erstreckt.

## Revendications

1. Condensateur céramique multicouche (330) pour un montage tridimensionnel comprenant :
une couche de céramique formée en une forme rectangulaire ;
une première électrode interne (301₁) ayant une première partie principale rectangulaire s'étendant le long d'une direction longitudinale dans une première face de la couche en céramique (302) et ayant deux côtés longs de la première partie principale exposée respectivement le long de côtés longs (302c, 302d) de ladite couche de céramique (302) ;
une deuxième électrode interne (301₂) ayant une deuxième partie principale rectangulaire s'étendant le long d'une direction longitudinale dans une deuxième face de la couche de céramique (302) opposée à ladite première face et ayant une paire de conducteurs s'étendant respectivement depuis les côtés courts de la deuxième partie principale vers les côtés courts (302a, 302b) de ladite couche de céramique (302);
un corps de condensateur en forme de parallélépipède rectangulaire (320) ayant une largeur, une longueur et une hauteur et composé d'une pluralité de premières électrodes internes (301₁) et de deuxièmes électrodes internes (301₂) empilées par l'intermédiaire de couches de céramique (302) de sorte que les côtés courts (302a, 302b) des couches de céramique (302) coïncident avec la direction de hauteur du corps de condensateur (320), et les côtés longs (302c, 302d) des couches de céramique (302) coïncident avec la direction de la largeur ;
une paire de premières électrodes externes (303, 303') formées au niveau d'une face supérieure et d'une face inférieure dudit corps de condensateur (320) et électriquement connectées à la première électrode interne (301₁) exposée vers les côtés longs de la couche de céramique (302) ; et
une deuxième électrode externe (304) formée au niveau des faces latérales du corps de condensateur (320) et électriquement connectée aux conducteurs exposés vers les côtés courts de la couche de céramique ;
**caractérisé en ce que** la direction d'empilement des couches de céramique (302) et la direction de hauteur des couches de céramique (302) du corps de condensateur (320) sont perpendiculaires ;
la longueur du corps de condensateur (320) coïncide avec la direction d'empilement et est plus longue que la hauteur du corps de condensateur (320) ;
lesdites premières électrodes externes (303, 303') peuvent être connectées à un premier tracé de circuit à l'extérieur dudit corps de condensateur (320) et ladite deuxième électrode externe (304) peut être connectée à un deuxième tracé de circuit différent dudit premier tracé de circuit ;
le condensateur céramique multicouche (330) est adapté pour être enterré dans une carte de circuit imprimé tridimensionnelle ; et
les premières électrodes externes (303, 303') et la deuxième électrode externe (304) du condensateur céramique multicouche (330) sont adaptées pour être connectées directement au tracé de circuit formé dans la carte de circuit imprimé tridimensionnelle.

2. Condensateur céramique multicouche selon la revendication 1, dans lequel la deuxième électrode externe (304) s'étend dans une bande le long de la circonférence entière des quatre faces latérales du corps de condensateur (320).
